# DEMANDE DE BREVET EUROPEEN

(11) **EP 0 565 419 A1**
(43) Date de publication de la demande: **13.10.1993**
(21) Numéro de dépôt: 93400874.9
(22) Date de dépôt: 05.04.1993
(51) Int. Cl.: B60Q 3/02

(54) **Dispositif d'éclairage ou de signalisation pour véhicule automobile, comprenant une lampe navette**

(30) Priorité: 08.04.1992 FR 9204292
(71) Demandeur: VALEO VISION, 93000 Bobigny (FR)
(72) Inventeur: Rives Claude, F-27930 Evreux (FR)
(74) Mandataire: Schrimpf, Robert

(57) **Abrégé**

Dispositifs d'éclairage ou de signalisation pour véhicule automobile, constitués d'un élément de support (100) pour lampe (10), notamment pour lampe navette pour véhicule automobile, du type comportant au moins une branche (130,140) élastiquement déformable pour assurer le maintien et la connexion électrique d'une borne terminale (11) de la lampe et un moyen pour sa fixation sur un socle (200).

Selon l'invention ledit moyen de fixation comprend au moins une patte de fixation (110) comprenant au moins un ergot saillant (111), ladite patte de fixation étant apte à être introduite essentiellement perpendiculairement à un plan dudit socle, à force dans au moins un logement (210) prévu dans le socle, de telle sorte que le ou chaque ergot saillant s'ancre dans une paroi (211) dudit logement.

Application à la réalisation de dispositifs d'éclairage de boîte à gants ou de plaque d'immatriculation arrière de véhicule automobile.

## Description

La présente invention concerne de façon générale les dispostifs d'éclairage ou de signalisation notamment pour véhicule automobile, du type comprenant une lampe telle qu'une lampe navette, et plus particulièrement un nouvel élément de support pour lampe, du type comprenant au moins un moyen de maintien et de connexion électrique de la lampe et un nouveau moyen pour sa fixation sur un socle.

Actuellement, on connaît de l'état de la technique, un dispositif d'éclairage à lampe navette pourvéhicu- le automobile, utilisé notamment pour l'éclairement d'une boîte à gants, de la plaque d'immatriculation arrière ou bien encore comme plafonnier, éclaireur de portière, ou éclaireur de courtoisie, comprenant une lampe navette et un support de la lampe fixé sur un socle monté sur le véhicule. Ce support comporte deux éléments de support de lampe essentiellement rectangulaire et plat, portant des branches métalliques de maintien et de connexion électrique de la lampe. Ces éléments de support de la lampe sont engagés essentiellement parallèlement au plan du socle dans des rainures de fixation prévues sur le socle. Pour sertir lesdits éléments dans lesdites rainures, on chauffe localement les parties du socle formant les parois desdites rainures, pour fondre lesdites parois de façon à ce qu'elles recouvrent en partie les éléments de support. Ainsi, lorsque le dispositif d'éclairage est monté, la lampe navette étant en suspension sur le socle, maintenue par lesdits éléments de support, ces derniers sont sertis à l'aide de languettes fondues s'étendant essentiellement perpendiculairement à la direction de la force exercée sur lesdits éléments de support, notamment lors de l'extraction de la lampe.

Ce dispositif d'éclairage présente plusieurs inconvénients.

Le montage d'un tel dispositif est complexe du fait de l'opération de sertissage des éléments de support sur le socle, qui n'est pas facile à réaliser. En effet, il faut chauffer le socle au niveau des parois de chaque rainure pour les fondre sur les éléments de support, cet échauffement pouvant provoquer la déformation plastique d'autres éléments du dispositif, tels que les éléments de support eux-mêmes. Par ailleurs, lorsque le socle est constitué par un matériau transparent de telle sorte qu'il constitue une fenêtre de sortie de la lumière dudit dispositif, les parties de sertissage une fois fondues, ainsi que les supports eux-mêmes, forment des zones d'ombre d'étendue importante qui tendent à diminuer le rendement d'éclairement d'un tel dispositif.

Afin de pallier ce dernier inconvénient précité, le réflexe de l'homme du métier est de diminuer l'étendue des éléments de support et/ou des languettes de sertissage fondues sur le socle, sans pour cela remettre en cause le moyen de fixation consistant à maintenir lesdits éléments de support par des languettes s'étendant perpendiculairement à la force exercée par la lampe sur lesdits supports, sachant qu'a priori le moyen de fixation le plus résistant est celui qui se place perpendiculairement à la force exercée.

A l'encontre du préjugé précité, l'invention propose un nouvel élément de support pour lampe, notamment pour lampe navette pour véhicule automobile, du type comportant au moins une branche élastiquement déformable pour assurer le maintien et la connexion électrique d'une borne terminale de la lampe et un moyen pour sa fixation sur un socle, l'élément de support étant caractérisé en ce que ledit moyen de fixation comprend au moins une patte de fixation comprenant au moins un ergot saillant, ladite patte de fixation étant apte à être introduite essentiellement perpendiculairement au plan dudit socle, à force dans au moins un logement prévu dans le socle, de telle sorte que le ou chaque ergot saillant s'ancre dans une paroi dudit logement.

Ainsi, il est intéressant de noter que selon la présente invention, la patte de fixation de l'élément de support vient se fixer sur le socle dans une direction essentiellement perpendiculaire au plan du socle. Bien que cette direction de fixation soit essentiellement parallèle à la direction de la force exercée par la lampe sur le support en suspension sur le socle, la patte de fixation selon l'invention s'est avérée être un moyen de fixation de résistance convenable.

De plus, la patte de fixation selon l'invention présente l'avantage d'être orientée avec une faible inclinaison par rapport au rayonnement susceptible de traverser le socle, ce qui permet de réduire considérablement les zones d'ombre du dispositif d'éclairage associé.

Suivant un mode de réalisation de l'élément de support selon l'invention, ledit moyen de fixation comporte deux pattes de fixation montées à deux extrémités respectives de l'élément de support et aptes à être introduites à force respectivement dans deux logements prévus sur le socle.

En outre, chaque patte de fixation est de forme essentiellement plate et chaque ergot saillant est réalisé en courbant la matière de ladite patte de fixation en dessous d'une encoche s'étendant vers l'intérieur à partird'un bord latéral de ladite patte. De ce fait chaque ergot présente une section qui diminue vers l'extrémité libre de la patte de fixation associée.

La présente invention concerne également un dispositif d'éclairage ou de signalisation notamment pour véhicule automobile, du type comprenant une lampe telle qu'une lampe navette, un socle et des moyens de support de la lampe sur le socle, lesdits moyens de support comprenant deux éléments de support selon l'invention.

La description qui va suivre en regard des dessins annexés, donnés à titre d'exemples non limitatifs, fera bien comprendre en quoi consiste l'invention et comment elle peut être réalisée.

- La figure 1 est un schéma d'ensemble en perspective du dispositif d'éclairage selon l'invention.
- La figure 2 est une vue de côté du dispositif de la figure 1 une fois monté.
- La figure 3 est un schéma de côté d'un élément de support selon l'invention.
- La figure 4a est une vue selon la flèche A de l'élément de support de la figure 3.
- La figure 4b est une vue partielle en perspective de la figure 4a.
- La figure 4c est une vue de dessus de la figure 4b.
- La figure 5 est une vue de dessus de l'élément de support selon l'invention.

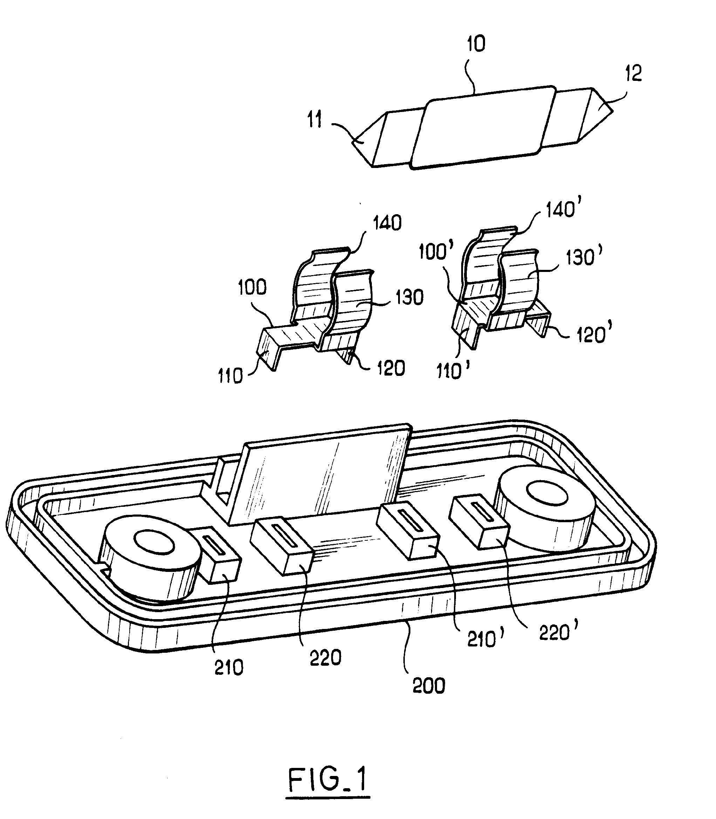

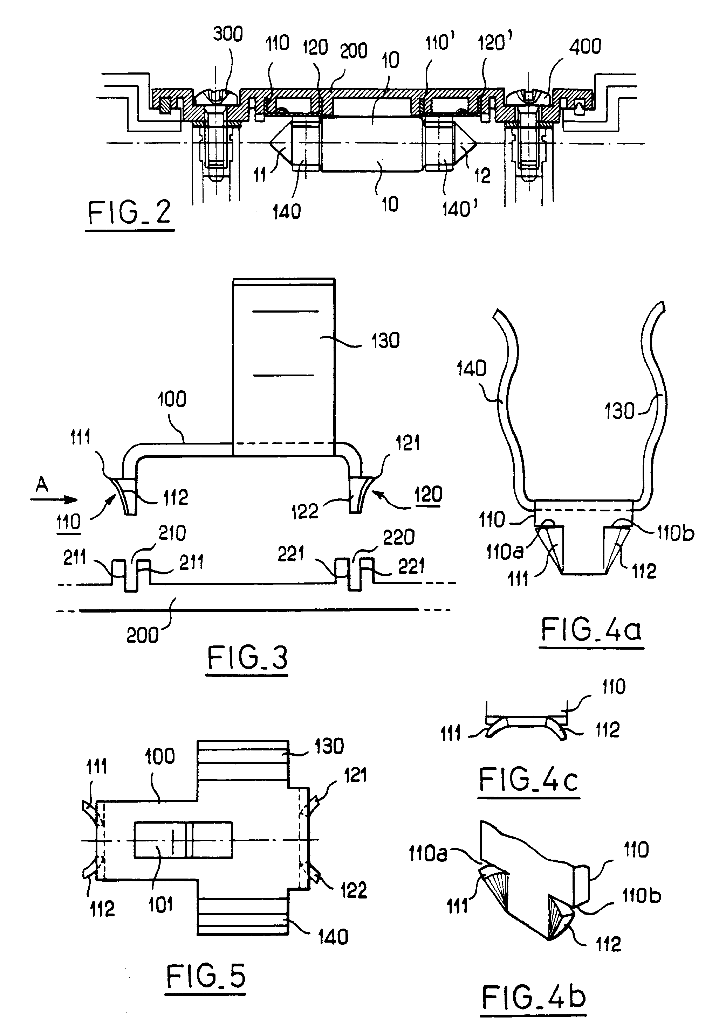

En référence tout d'abord aux figures 1 et 2, on a représenté un dispositif d'éclairage selon l'invention. Ce dispositif comporte une lampe navette 10, un socle 200 et des moyens de support 100,100' de la lampe 10 sur le socle. Chaque élément de support 100,100' comporte deux branches 130,140,130', 140' élastiquement déformables pour assurer le maintien et la connexion électrique d'une borne terminale respective 11,12 de la lampe 10. Comme le montre mieux la figure 5, chaque élément de support 100,100' comprend dans sa partie centrale, une fenêtre 101 permettant l'arrivée d'un fil de connexion non représenté pour l'alimentation électrique de la lampe. En outre, les éléments de support 100,100' comprennent des moyens de fixation sur le socle. Ces moyens de fixation sont constitués par deux paires de pattes de fixation 110,120,110',120' prévues respectivement aux deux extrémités desdits éléments de support et aptes à être introduites à force essentiellement perpendiculairement au plan dudit socle respectivement dans des logements 210,220,210',220' prévus dans le socle.

Sur la figure 3, on a représenté en détail un élément de support 100 selon l'invention, qui fait partie du dispositif d'éclairage de la figure 1. Comme on peut le voir sur cette figure, chacune des deux pattes de fixation 110,120 dudit élément 100 comprend deux ergots saillants 111,112,121,122 dans la région de deux bords latéraux opposés de ladite patte. Plus particulièrement, comme on peut le voir sur les figures 4a, 4b, 4c, chaque patte de fixation 110,120 est essentiellement plate et chaque ergot saillant est réalisé en courbant la matière de ladite patte de fixation en dessous d'une encoche 110a, 110b s'étendant vers l'intérieur à partir du bord latéral de la patte de fixation. Comme on peut mieux le voir sur la figure 4c, chaque ergot présente une section qui diminue vers une extrémité libre de la patte de fixation associée.

Lorsque les pattes de fixation 110,120 sont introduites essentiellement perpendiculairement au plan du socle, à force dans respectivement deux logements 210,220 prévus sur le socle, les ergots saillants s'ancrent dans les parois 211,221 du logement associé.

Il convient de préciser que les ergots saillants sont constitués par un matériau métallique qui peut se déformer élastiquement lors de leur introduction dans lesdits logements et qui est capable de déformer plastiquement la matière constituant le socle de manière à s'ancrer solidement dans les parois 211,221 desdits logements.

Ainsi, lorsque le dispositif d'éclairage selon l'invention est monté sur le véhicule, à l'aide de vis 300,400 par exemple pour éclairer une plaque d'immatriculation arrière de véhicule, comme le montre la figure 2, la lampe 10 est maintenue en place sur les éléments de support 100,100' fixés sur le socle. Lorsqu'une force est exercée sur la lampe pour son extraction, les pattes de fixation 110,120,110',120' exercent alors par l'intermédiaire desdits ergots saillants ancrés solidement dans le socle, une force de maintien qui s'oppose à la force d'extraction des éléments de support. Cette force de maintien s'avère suffisante pour permettre une extraction de la lampe dans des conditions normales.

De plus, il est intéressant de noter que, lorsque le socle 200 est constitué par un matériau transparent ou translucide qui constitue une fenêtre de sortie de lumière du dispositif d'éclairage ou de signalisation, l'orientation des pattes de fixation 110,120 est telle qu'elles constituent des zones d'ombre peu importantes et n'entraînent pratiquement aucune perte de flux lumineux.

## Revendications

1. Elément de support (100) pour lampe (10), notamment pour lampe navette pour véhicule automobile, du type comportant au moins une branche (130,140) élastiquement déformable pour assurer le maintien et la connexion électrique d'une borne terminale (11) de la lampe (10) et un moyen pour sa fixation sur un socle (200), caractérisé en ce que ledit moyen de fixation comprend au moins une patte de fixation (110) comprenant au moins un ergot saillant (111), ladite patte de fixation (110) étant apte à être introduite essentiellement perpendiculairement à un plan dudit socle (200) selon le sens de mise en place de la lampe sur le socle, à force dans au moins un logement (210) prévu dans le socle (200), de telle sorte que le ou chaque ergot saillant (111) s'ancre dans une paroi (211) dudit logement (210).

2. Elément de support selon la revendication 1, caractérisé en ce que le moyen de fixation comporte deux pattes de fixation (110,120) montées à deux extrémités respectives du support (100) et aptes à être introduites à force respectivement dans deux logements (210,220) prévus sur le socle.

3. Elément de support selon l'une des revendications 1 ou 2, caractérisé en ce que chaque patte de fixation (110,120) est essentiellement plate et comporte deux ergots saillants (111,112,121, 122) dans la région de deux bords latéraux opposés de ladite patte (110,120).

4. Elément de support selon l'une des revendications 1 à 3, caractérisé en ce que la ou chaque patte de fixation (110,120) est de forme essentiellement plate et en ce que le ou chaque ergot saillant (111,112,121 122) est réalisé en courbant la matière de ladite patte de fixation (110,120) au-dessous d'une encoche (110a,110b) s'étendant vers l'intérieur à partir d'un bord latéral de ladite patte (110,120).

5. Elément de support selon l'une des revendications 1 à 4, caractérisé en ce chaque ergot (111,112,121,122) présente une section qui diminue vers une extrémité libre de la patte de fixation (110,120) associée.

6. Dispositif d'éclairage ou de signalisation notamment pour véhicule automobile, du type comprenant une lampe (10), telle qu'une lampe navette, un socle (200) et des moyens de support (100,100') de la lampe sur le socle (200), caractérisé en ce que les moyens de support (100,100') comprennent deux éléments de support (110,120,110',120') selon l'une des revendications 1 à 5.

7. Dispositif selon la revendication 6, caractérisé en ce que le socle (200) est transparent ou translucide et constitue une fenêtre de sortie de lumière du dispositif d'éclairage ou de signalisation.
